# EUROPÄISCHE PATENTSCHRIFT

(11) **EP 2 291 903 B1**
(45) Veröffentlichungstag und Bekanntmachung des Hinweises auf die Patenterteilung: **26.08.2015**
(21) Anmeldenummer: 09769146.3
(22) Anmeldetag: 16.06.2009
(51) Int. Cl.: H02K 7/06, F02B 37/18

(54) **LINEARSTELLANTRIEB, INSBESONDERE ZUM VERSTELLEN DER KLAPPEN IN KFZ-TURBOLADERN**
LINEAR ACTUATOR, IN PARTICULAR FOR ADJUSTING THE FLAPS IN MOTOR VEHICLE TURBOCHARGERS
MECANISME DE COMMANDE LINEAIRE, EN PARTICULIER POUR LE REGLAGE DE CLAPETS DANS DES TURBOCOMPRESSEURS DE VEHICULES A MOTEUR

(30) Priorität: 24.06.2008 DE 102008030016
(43) Veröffentlichungstag der Anmeldung: 09.03.2011
(73) Patentinhaber: Schaeffler Technologies AG & Co. KG, 91074 Herzogenaurach (DE)
(72) Erfinder: HILL, Wolfgang, 76135 Karlsruhe (DE)
(86) Internationale Anmeldenummer: PCT/EP2009/057417
(87) Internationale Veröffentlichungsnummer: WO 2009/156297

(56) Entgegenhaltungen:
- EP-A1- 1 363 382
- EP-A2- 1 041 698
- WO-A1-03/003546
- DE-A1-102005 040 290
- DE-A1-102005 055 868

## Beschreibung

Die Erfindung betrifft einen Linearstellantrieb, insbesondere zum Verstellen der Klappen in Kfz-Turboladern, mit einem von einem Elektromotor linear bewegbaren Stellelement, vorzugsweise einer Spindelwelle.

Turbolader dienen zur Leistungssteigerung von Verbrennungsmotoren durch eine Vorverdichtung der in den Verbrennungsmotor strömenden Luft. Die Vorverdichtung erlaubt eine Steigerung von Brennraumfüllungen des Verbrennungsmotors bei gegebenen Brennraumvolumina. Da die maximale Leistung durch die Brennraumfüllung beschränkt wird, steigen die realisierbaren Drehmomente und Leistungen mit steigenden Brennraumfüllungen an. Bei Turboladern wird die für die Vorverdichtung der Luft auf der Einlassseite des Verbrennungsmotors notwendige Energie der inneren und der kinetischen Energie des Abgases entnommen. Das Abgas treibt eine Turbine an, die über eine Welle einen Verdichter antreibt. Die aus dem Abgas auf die Turbine übertrage Leistung wird durch den Abgasmassenstrom und das Enthalpie-Gefälle über der Turbine bestimmt.

Die Regelung des Ladedrucks kann unter anderem über mechanisch verstellbare Klappen erfolgten. Je nach Klappenstellung wird ein größerer oder kleinerer Abgasmassenstrom über die Turbine geleitet. Die Verstellung der Klappen erfolgte bislang überwiegend durch pneumatische Linearstellantriebe, bei denen die benötigte Druckluft vom System selbst abgezweigt wird. Obwohl pneumatische Linearstellantriebe preisgünstig sind und in hohen. Stückzahlen gefertigt werden, sind sie mit einigen Nachteilen verbunden. Zum einen kann die Klappenstellung nicht exakt eingestellt werden. Im Wesentlichen sind nur die Zustände "auf" und "zu" sicher verfügbar, Zwischenstellung können nur ungenau und mit geringer Dynamik umgesetzt werden. Zum anderen haben pneumatische Linearstellantriebe den Nachteil, dass sie eine aufwendige Druckversorgung erfordern. Bei Undichtheiten des Drucksystems kann es sehr schnell zum Ausfall des Linearstellantriebes kommen.

Generell sind elektromechanische Linearstellantriebe in unterschiedlichen Ausführungsformen bekannt. Bei niedrigen Stellleistungen und hohem Kostendruck kommen häufig Schneckengetriebe aus Kunststoff in Kombination mit mechanisch kommutierten Gleichstrommotoren zum Einsatz. Elektromechanische Linearstellantriebe mit konventionellen Getriebestufen mit Selbsthemmung, meist Schneckengetriebe, erreichen zwar hohe Übersetzungen, weisen aber eine hohe Wirkungsgradstreuung auf. Um eine sichere Selbsthemmung zu gewährleisten, ist ein niedriger Nennwirkungsgrad zu wählen. Im ungünstigsten Fall muss die elektrische Leistung des Elektromotors und der Elektronik mit hohem Sicherheitsfaktor und damit teuer ausgelegt werden. Durch ein Schneckengetriebe allein entsteht noch nicht die zum Verstellen der o.g. Klappen eines Turboladers erforderliche Linearbewegung. Um diese zu realisieren, ist eine Zahnstange oder eine Hebelanordnung erforderlich, die zusätzlichen Bauraum und Kosten erfordert sowie die Verschließanfälligkeit des Stellantriebs erhöht.

Aus dem Stand der Technik sind auch elektrorüechanische Linearstellantriebe bekannt, bei denen der Elektromotor direkt über eine Spindelmutter die Linearkraft erzeugt. Solche Linearstellantriebe werden bei Kraftfahrzeugen z.B. zur Verstellung von Scheinwerfern oder Luftklappen eingesetzt. Sie weisen in der Regel eine Spindelmutter aus Kunststoff und Klauenpol-Schrittmotoren auf. Linearstellantriebe mit einer Kunststoffspindelmutter und Klauenpol-Schrittmotoren sind nur bei leistungsschwachen Anwendungen mit geringer Dynamik im Einsatz. Dies liegt einerseits am niedrigen Wirkungsgrad und hohem Verschleiß der Kunststoffspindelmutter und andererseits auch am niedrigen Wirkungsgrad des Klauenpol-Schrittmotors. Aufgrund hoher Streuflüsse zwischen den Klauen werden nur Wirkungsgrade von ca. 30% erreicht. Kühlprobleme verhindern die wirtschaftliche Nutzung von Klauenpolmotoren mit höheren Leistungen.

In der DE 10 2005 055 868 A1 wird ein Linearstellmotor mit einem Gewindetrieb beschrieben, bei welchem die Gewindemutter durch eine Metallscheibe gebildet ist.

Aus der DE 10 2005 040 290 A1 ist ein Antrieb zur Verstellung von Klappen für die Zuführung von Luft in Kraftfahrzeugen bekannt. Ein Untersetzungsgetriebe ist mit dem Antriebsmotor in einem Gehäuse angeordnet. Der Rotor des Antriebsmotors umgreift das Statorpaket glockenartig.

Der EP 1 126 582 A2 kann ein Linearstellantrieb mit einem von einem elektrischen Stellantrieb bewegbaren Linearstößel entnommen werden. Der elektrische Stellantriebe ist ein elektronisch kommutierter Elektromotor dessen Rotor den Linearstößel konzentrisch umgibt. Der Rotor kann eine Spindelmutter mit einem Gewinde zur Bewegung des Linearstößels aufweisen. Bei dieser Ausführungsform sind auf dem Rotor von außen konzentrisch mehrere Magnetringe oder konzentrisch ein vielfach polarisierter Magnetring angeordnet. Der Linearstellantrieb kann bei variablen Turboladern für Brennkraftmaschinen zum Verstellen der Schaufeln des Turboladers eingesetzt werden.

Die DE 10 2005 040 290 A1 zeigt einen Antrieb zur Verstellung von Klappen, insbesondere für die Zuführung von Luft in Kraftfahrzeugen. Der Antriebsmotor wird von einer Motorsteuerung angesteuert, welche als integrierter Schaltkreis ausgebildet ist. Die den Schalkreis tragende Leiterplatte ist in die obere Seite eines Zwischengehäuses derart integriert, dass der integrierte Schaltkreis in eine Öffnung eingreift, welche eine Verbindung von der oberen zur unteren Seite des Zwischengehäuses ermöglicht.

Die EP 1 041 698 B1 zeigt einen Linearstellantrieb mit einer von einem Elektromotor linear bewegbaren Gewindemutter, welche mit einem Gewindebereich einer einstückig mit dem Rotor ausgeführten Rotorwelle in Eingriff steht, um bei Drehung der Rotorwelle eine lineare Verschiebung der Gewindemutter zu bewirken. Der Rotor ist zwischen zwei einander axial gegenüberliegenden Statoren angeordnet.

Die Aufgabe der vorliegenden Erfindung besteht somit ausgehend von der EP 1 041 698 B1darin, einen verbesserten Linearstellantrieb, insbesondere zum Verstellen der Klappen in Kfz-Turboladern zur Verfügung zu stellen, der sich durch eine hohe Dynamik, kleine Abmessungen und niedrige Herstellungskosten auszeichnet.

Zur Lösung der erfindungsgemäßen Aufgabe dient ein Linearstellantrieb gemäß dem beigefügten Anspruch 1.

Der zum Bewegen der Spindelwelle dienende Elektromotor des Linearstellantriebs ist eine zweiphasige Transversalflussmaschine, deren Rotor zwischen zwei einphasigen, einander axial gegenüberliegenden Statoren angeordnet ist und mit einem Rotationselement verbunden ist, welches mit der Spindelwelle in Eingriff steht und dessen Drehung in die Linearbewegung des Spindelwelle umgesetzt wird.

Als besonders vorteilhaft hat es sich erwiesen, wenn der Rotor eine mit der Spindelwelle in Eingriff stehende Spindelmutter oder eine Taumelhülse umfasst. Die magnetisch aktiven Teile des Rotors sind dabei direkt an axial gegenüberliegenden Seiten der Spindelmutter oder Taumelhülse angeordnet. Ein weiterer Vorteil der

erfindungsgemäßen Lösung ist darin zu sehen, dass die Spindelmutter oder Taumelhülse durch einen so genannten Zwischenläufer angetrieben wird, welcher im Zentrum eines symmetrisch aufgebauten Elektromotors angeordnet ist. Hierdurch entstehen kurze Kraftwege. Die rotierende Masse ist sehr klein. Die mit der kleinen Masse verbundene kleine Trägheit der bewegten Teile sorgt für kurze Beschleunigungszeiten, womit der erfindungsgemäße Linearmotor als Stellantrieb für die Klappen eines Turboladers prädestiniert ist.

Nach einer vorteilhaften Ausführungsform ist der Elektromotor als zweiphasige Transversalfluss-Reluktanzmaschine ausgeführt. Der Einsatz von Reluktanzmaschinen ist vorteilhaft,: da bei diesen auf kostenintensive separate Rotorlagesensoren verzichtet werden kann. Stattdessen wird bei Reluktanzmaschinen die bereits vorhandene Wicklung als Sensorspule und der Magnetkreis als winkelabhängige Induktivität genutzt. Ohne zusätzliche Bauteile kann somit eine analoge Winkelmessung mit durch die Steuerelektronik des Motors bestimmbarer Auflösung realisiert werden. Auf diese Weise lassen sich Herstellungskosten einsparen.

Von Vorteil ist es, wenn beide Statoren baugleiche Statorkerne aufweise. Die magnetischen Arbeitsluftspalte sind hierbei radial übereinander angeordnet. Gegenüber konventionellen Dosenmotoren der Klauenpolbauart wird durch diese Anordnung der Streufluss erheblich reduziert, wodurch ein wesentlich höherer Wirkungsgrad erreicht werden kann. Zusätzlich kompensieren sich die auf den Rotor wirkenden Luftspaltkräfte weitgehend und eine Belastung von Lagern oder der Spindelmutter bzw. Taumelhülse durch magnetische Kräfte ist weitgehend auf die gewünschten tangentialen Drehmomente beschränkt.

Bei einer zweckmäßigen Ausführungsform bestehen die Statorkerne aus ringförmigen Blechen mit U-förmigem Querschnitt, wobei deren Schenkel einen radial inneren und einen radial äußeren Kronenkranz mit axial hervorragenden Zähnen aufweisen. Die Zahnzahlen des radial inneren und des radial äußeren Kronenkranzes sind gleich und entsprechen der Polpaarzahl des Linearstellantriebs. Vorteilhaft ist die Verwendung weniger, dicker Elektrobleche für die Statorkerne, die als Stanzbiegeteile hergestellt und ineinander geschachtelt werden.

Nach einer weiteren vorteilhaften Ausführungsform weisen die Statoren jeweils eine als Ringspule ausgebildete Statorspule auf. Als besonders günstig hat sich die Verwendung von Aluminiumbandspulen verwiesen. Aluminiumbandspulen sind wesentlich preiswerter als Kupferdrahtspulen. Kupferdrahtspulen können selbstverständlich auch zum Einsatz kommen. Aluminiumbandspulen kompensieren den Nachteil geringerer Leitfähigkeit von Aluminium weitgehend durch einen höheren Füllfaktor. Die Aluminiumbandspulen weisen zwei entgegengesetzt gewickelte Wicklungshälften auf. Eine Wicklungshälfte führt den Strom radial nach innen, wo er in einer Aussparung des inneren Kronenkranzes in die zweite Sputenhälfte wechselt und in dieser wieder im gleichen Drehsinn radial nach außen fließt.

Bei einer zweckmäßigen Ausführungsform besteht der Rotor aus wenigen, doppelt gezahnten Ringblechen. Diese Rotorausführung ist besonders preiswert. Die Ringbleche können durch Stanzen und ggf. Paketieren hergestellt werden.

Für die Verstellung gegen ein Lastmoment sind die Zähne entweder im Rotor oder im Stator breiter als die Nut ausgeführt und weisen zu einem tangentialen Ende hin eine Rampe auf, die den Luftspalt stetig vergrößert. Jene Richtung in der die Rampe den Luftspalt vermindert, ist die Vorzugsrichtung und in Vorzugsrichtung können die Phasen > 180°el bestromt werden, wodurch ein Verstellen gegen eine Last aus jeder Stellung heraus möglich ist. Beim Verstellen gegen die Vorzugsrichtung hilft dann das Lastmoment und zum Start wird zunächst das Stellsystem in Vorzugsrichtung um weniger als einen Schritt (z.B. 150°el) aus einer Vorzugsstellung herausgedreht und dann die zweite Phase vorzeitig maximal bestromt. Durch den unvollständigen Schritt erfolgt eine Richtungsumkehr und das Stellorgan beschleunigt unterstützt vom Lastmoment gegen die Vorzugsrichtung. Bei einem mechanischen Wirkungsgrad der Taumelmutter nahe 50% reicht der Schwung der geringen Rotormasse aus, um den kraftfreien Winkelbereich zu überwinden und trotz einer Bestromungsdauer <180°el auch gegen die Vorzugsrichtung sicher zu Verstellen.

Eine sichere Verstehung auch bei mechanischen Wirkungsgraden deutlich unter 50% und eine höhere Leistungsdichte kann mit einer Rotorbauform mit Dauermagnetringen erreicht werden. In diesem Fall handelt es sich um eine permanenterregte Transversalflussmaschine. Hierbei können vorzugsweise zwei Dauermagnetringe mit wechselweise radial magnetisierbaren Sektoren auf axial gegenüberliegenden Seiten der Spindelmutter bzw. Taumelhülse eingesetzt werden. Diese Rotorausführung ist jedoch mit höheren Kosten verbunden.

In einer besonders bevorzugten Ausführungsform der Erfindung hat der Rotor in axialer Richtung einen asymmetrischen Aufbau. Dem der ernsten Phase der zweiphasigen Transversalflussmaschine zugeordneten ersten Stator ist eine Permanenterregung zugeordnet, indem auf der einen Seite des Rotors Permanentmagnetringe in der zuvor beschriebenen Weise angeordnet sind. Dem zweiten Stator ist der gezahnte Rotorteil auf der anderen Seite des Rotors zugeordnet. Die Transversalflussmaschine arbeitet in dieser Ausführungsform in der ersten Phase als permanenterregter Transversalflussmotor und in der zweiten Phase als Reluktanzmaschine. Besonders vorteilhaft bei dieser Ausführungsform ist ein verbessertes Anlaufverhalten der Maschine. Die permanenterregte Phase kann magnetische anziehende und abstoßende Kräfte nutzen und bis auf kleine Winkelbereiche nahe der Poldeckung zur Drehmomentbildung stark beitragen. Die Reluktanzphase trägt genau in diesem drehmomentschwachen Winkelbereich zur Drehmomentbildung bei. Die Drehmomentbildung kann durch eine entsprechend höhere Zahnzahl auf der Reluktanz-Seite des Rotors und durch eine geschickte Bestromung des Stators in beide Richtungen optimiert werden.

Im Vergleich zur permanenterregten Variante kann ein relativ hohes Drehmoment bei verringerten Kosten erzielt werden. In der zweiten Phase (Hilfs-Phase) werden die Kosten für die Permanentmagneten eingespart. Gleichzeitig kann diese Phase hervorragend als Winkelsensor für die elektronische Kommutierung verwendet werden, dadurch können die sonst erforderlichen Sensoren eingespart werden. Diese Mischform kornbiniert den Vorteil der Permanenterregung (hohes Drehmoment) mit dem der Reluktanzmaschine (kostengünstig) und verbessert außerdem das Anlaufverhalten des Antriebs.

Nach einer weiteren vorteilhaften Ausführungsform ist der Rotor über Lagerbleche mit der Spindelmutter bzw. Taumelhülse verbunden. Die Lagerbleche können aus Edelstahl oder Kunststoff bestehen. Die Rotorbtechringe können direkt in die Kunststofflagerbleche eingegossen sein. Egal ob Edelstahl oder Kunststoff für die Lagerbleche zum Einsatz kommt, die rotierenden Teile des Linearstellantriebs sind relativ klein und preiswert herstellbar. Dank der niedrigen Trägheit kann mit kleinen Drehmomenten eine hohe Dynamik erreicht werden.

Aufgrund der kompakten Ausführung des Rotors ist es möglich, den Rotor lediglich durch ein zentrales Lager zu lagern. Das Lager ist hierbei direkt zwischen den Rotorblechringen angeordnet. Dadurch , dass lediglich ein Lager benötigt wird, kann im Vergleich zu herkömmlichen Lösungen, bei denen in der Regel zwei Lager zum Einsatz kommen, eine wesentliche Kostenreduktion erreicht werden.

Weiterhin ist es vorteilhaft, wenn der Linearstellantrieb Statorhülsen zur axialen Führung der Spindelwelle aufweist. Die Statorhülsen werden vorzugsweise als Spritzgussteile aus einem temperaturfesten Kunststoff mit guten Gleiteigenschaften hergestellt. Die Statorhülsen füllen die Aussparungen in den inneren Kronenringen der Statorkerne aus und können auch direkt an diese angespritzt werden. Neben der Führungsfunktion für die Spindelwelle stabilisieren und fixieren die Statorhülsen die Statorkerne.

Weitere Vorteile, Einzelheiten und Weiterbildungen der vorliegenden Erfindung ergeben sich aus der nachfolgenden Beschreibung bevorzugter Ausführungsformen unter Bezugnahme auf die Zeichnung. Es zeigen:
- Fig. 1: eine erste Ausführungsform eines erfindungsgemäßen Linearstellantriebs in einer Längsschnittdarstellung;
- Fig. 2: eine zweite Ausführungsform des erfindungsgemäßen Linearstellantriebs in einer Längsschnittdarstellung;
- Fig. 3: eine dritte Ausführungsform des Linearstellantriebs in einer Längsschnittdarstellung.

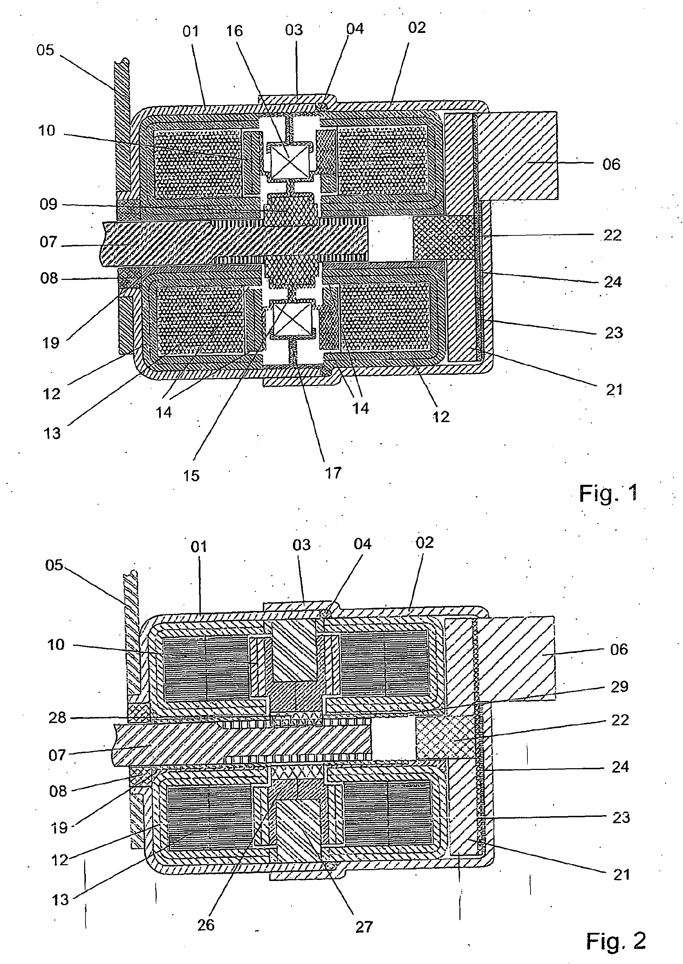

Fig. 1 zeigt eine erste Ausführungsform eines erfindungsgemäßen Linearstellantriebs in einer Längsschnittdarstellung. Der erfindungsgemäße Linearstellantrieb umfasst ein topfförmiges Gehäuse, das aus einem ersten und einem zweiten Gehäusetopf 01, 02 besteht. Der zweite Gehäusetopf 02 weist an seinem offenen Ende eine Erweiterung 03 auf, innerhalb derer das offene Ende des ersten Gehäusetopfs 01 angeordnet ist. Zur Abdichtung dient ein am ersten Gehäusetopf 01 angeordneter 0-Ring 04. Der erste Gehäusetopf 01 weist eine Halterung 05 zur Befestigung an einer Anschlusskonstruktion auf. Am zweiten Gehäusetopf 02 ist ein Stecker 06 für die Energiezufuhr und Signalübertragung angeordnet. Bei abgewandelten Ausführungsformen können die beiden Gehäusetöpfe auf andere Weise miteinander verbunden sein. Ebenso ist die Position des Steckers variabel.

Innerhalb des Gehäuses ist eine Spindelwelle 07 angeordnet, deren eines Ende aus dem ersten Gehäusetopf 01 herausragt. Dieses Spindelwellenende kann mit dem anzutreibenden Element (nicht dargestellt), wie beispielsweise einer Klappe eines Kfz-Turboladers, verbunden werden. Zum Abdichten der Spindelwelle 07 dient eine Wellendichtung 08. Konzentrisch um die Spindelwelle 07 herum ist eine Spindelmutter 09 angeordnet. Ein Gewindeabschnitt der Spindelwelle 07 greift in ein entsprechendes Gegengewinde der Spindelmutter 09 ein. Die Spindelmutter 09 besteht aus einem Gleitwerkstoff.

Zum rotativen Bewegen der Spindelmutter 09, durch welche die lineare Bewegung der Spindelwelle 07 hervorgerufen wird, dient ein als zweiphasige Transversalfluss-Reluktanzmaschine ausgeführter Elektromotor. Die Transversalfluss-Reluktanzmaschine umfasst zwei einphasige, einander gegenüberliegende Statoren und einen einzigen Rotor 10 der zwischen den beiden Statoren angeordnet ist. Die beiden Statoren besitzen baugleich ausgeführte Statorkerne 12. Die Statorkerne 12 bestehen aus mindestens zwei ineinander geschachtelten ringförmigen Blechen mit U-förmigen Querschnitt, deren Schenkel jeweils zwei Kronenkränze aufweisen. Die Statoren umfassen weiterhin jeweils eine Statorspule 13. Die Statorspulen 13 sind als Ringspulen ausgeführt. Bei der in Fig. 1 gezeigten Ausführungsform kommen Ringspulen aus Kupferrunddraht zum Einsatz. Der Magnetfluss wechselt im Wesentlichen in radiale Richtung vom Statorkern 12 zum Rotor 10 und vom Rotor 10 zurück zum Statorkern 12 und nutzt dabei zwei ringförmige Luftspalte 14 mit unterschiedlichen Durchmessern.

In der dargestellten, besonders kostengünstigsten Variante besteht der Rotor 10 aus wenigen doppelt gezahnten Blechringen.

Der Rotor 10 kann aber auch anstelle der Blechringe mit Permanentmagneten ausgeführt werden. Dann muss eine Sensorik für die Erkennung der Rotorlage vorgesehen werden.

Die beiden radialen Luftspalte 14 jedes Stators sind magnetisch in Reihe geschaltet. Hierdurch wirken sich Lageänderungen des Rotors 10 in den Uförmigen Öffnungen der Statorkerne 12 nur wenig auf die magnetischen Kräfte aus. Dies gilt sowohl in axialer als auch in radialer Richtung. Diese relative Unempfindlichkeit gegenüber Luftspalttoleranzen erlaubt eine einfache Lagerung und Montage des Linearstellantriebs. Die radialen Kraftkomponenten der Luftspalte kompensieren sich teilweise. Dadurch wird der Rotor weitgehend entlastet und die Lagerreibung sinkt.

Die Spindelmutter 09 ist über rotierende Lagerbleche 15 mit dem Rotor 10 verbunden. Zur Lagerung des Rotors 10 dient ein zentrales Lager 16, welches über stationäre Lagerbleche 17 mit dem ersten Gehäusetopf 01 ihn Verbindung steht. Das Lager 16 ist in der dargestellten Ausführungsform als Wälzlager ausgeführt. Zur Führung der Spindelwelle 07 dienen Statorhülsen 19, welche gleichzeitig auch die Statorkerne 12 stabilisieren und fixieren.

Ergänzend oder alternativ kann am Ende der Spindelwelle 07 ein Gleitblock und auf der Abtriebsseite vor dem Gewinde eine Gleithülse auf der Spindelwelle angeordnet werden. Durch diese Gleitelemente (nicht dargestellt) ist eine exakte Linearführung der Spindelwelle 07 gewährleistet, ohne dass das Gewinde die Statorhülsen 19 beschädigen kann.

Die Ansteuerung der Statorspulen 13 erfolgt über eine Steuerelektronik 21. Die Steuerelektronik 21 ist vorzugsweise am Boden des zweiten Gehäusetopfs 02 angeordnet. Hierfür steht eine kreisförmige Scheibe als Bauraum zur Verfügung. Axial sollte die Bauhöhe der Steuerelektronik 21 minimal ausgeführt werden. Die Steuerelektronik 21 umfasst einen zylindrischen Kondensator 22, der im zweiten Gehäusetopf 02 in einem Bereich der Statorhülse 19, welcher nicht von der Spindelwelle 07 eingenommen wird, angeordnet ist. Alle anderen elektronischen Bauelemente sind auf einem Schaltungsträger 23 vorzugsweise einseitig angeordnet und vergossen. Über seine Rückseite führt der Schaltungsträger 23 die Wärmeverluste über eine Wärmeleitfolie 24 an den Boden des zweiten Gehäusetopfs 02 ab, sodass sich eine gute Kühlwirkung ergibt. Der Stecker 06 ragt am Rand des Bodens des zweiten Gehäusetopfs 02 axial oder auch radial aus dem zweiten Gehäusetopf 02. Die Anschlüsse der Statorspulen 13 sind radial außen liegend angeordnet, um sie axial durch die Lagerabstützung zur Steuerelektronik 21 führen zu können. Durch eine Öffnung im zweiten Gehäusetopf 02 können vor dem Fixieren des Steckers 06 die beiden Anschlüsse der im Bereich des ersten Gehäusetopfs 01 befindlichen Statorspule 13 an den Schaltungsträger 23 angeschlossen werden. Die Steuerelektronik 21 erfasst mit Hilfe von Testimpulsen die winkelabhängige Veränderung der Induktivität der Statorspulen 13 und ermittelt daraus die Rotorlage. Auf die sonst zu diesem Zweck eingesetzten Rotorlagesensoren kann daher verzichtet werden, was neben Montageerleichterungen nicht zu letzt auch zu Kosteneinsparungen führt.

Die Integration der Steuerelektronik 21 in das Gehäuse ist ein Beitrag zur Senkung der Systemkosten.

Durch entsprechende Ansteuerung der Statoren dreht sich die Spindelmutter 09, sodass die Spindelwelle 07 aus dem Gehäuse heraus oder in das Gehäuse hinein gefahren wird. Die Positioniervorgabe erfolgt dabei über den Stecker 06 an die Steuerelektronik 21, die dieses Signal in Ansteuersignale für die Statoren umsetzt.

Fig. 2 zeigt eine zweite Ausführungsform des erfindungsgemäßen Linearstellantriebs in einer Längsschnittdarstellung. Diese Ausführungsform unterscheidet sich von der in Fig. 1 beschriebenen Ausführungsform im Wesentlichen dadurch, dass für die Statorspulen 13 Ringspulen aus Aluminiumband verwendet werden. Das Aluminiumband ist mit einer Oxidschicht als Isolierung versehen. Die Aluminiumbandspule besteht aus zwei gegenläufig gewickelten Hälften. Durch die Verwendung von Aluminiumbandspulen statt Kupferdrahtspulen lassen sich Kosten sparen. Ein weiterer Unterschied zur ersten Ausführungsform besteht darin, dass als Lager ein Gleitlager umfassend rotierende Gleitlagerteile 26 und einen stationären Lagerring 27 verwendet wird. Gleitlager sind preiswerter als Wälzlager. Durch den Einsatz eines Gleitlagers lassen sich somit weitere Kosten sparen. Außerdem kommt statt der Spindelmutter eine Taumelhülse 28 zum Einsatz. Die Taumelhülse 28 weist an ihrer inneren Mantelfläche tangentiale Rillen auf. Zur Positionierung der Taumelhülse 28 ist in diesem Fall eine Führungshülse 29 vorgesehen, die sich axial rechts und links der Taumelhülse 28 erstreckt.

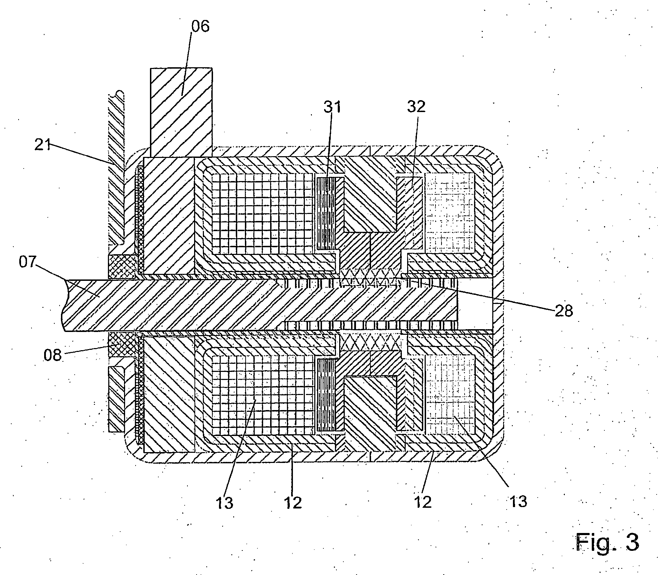

In Fig. 3 ist eine dritte Ausführungsform als "Mischform" von Permanenterregung und Reluktanzmotor dargestellt. Die Steuerelektronik 21 und der Stecker 06 sind in dieser Ausführungsform auf der Wellenseite des Linearstellantriebes angeordnet. Statorkerne 12, Statorspulen 13, rotierende Gleitlagerteile 26 und Taumelhülse 28 können wie zuvor beschrieben ausgeführt sein. Selbstverständlich kann diese Ausführungsform auch mit einer Spindelmutter und Wälzlagerung gemäß Fig. 1 ausgeführt sein.

Der Rotor ist in dieser Ausführungsform asymmetrisch aufgebaut, er ist auf der links dargestellten Statorseite mit Permanentmagneten 31 ausgeführt, auf der rechten Seite mit einem Rotorblechpaket 32.

Die links dargestellte Phase der zweiphasigen Transversalflussmaschine arbeitet also permanenterregt und liefert in etwa 60 bis 80% der Periodendauer das Drehmoment. Während der Kommutierungszeit wird die Drehmomenterzeugung von der Reluktanzseite (rechts dargestellte Seite) unterstützt. Das Reluktanzhilfsmoment wirkt in etwa 20 bis 40% der Periodendauer. Zusätzlich wirkt die Reluktanzseite als induktiver Winkelsensor und erzeugt das Rotorlagesignal zu elektronischen Kommutierung der permanenterregten Hälfte.

Die Statorwicklungen 13 sind entsprechend den Ansteuerungserfordernissen der jeweiligen Seite dimensioniert.

### Bezugszeichenliste

- 01: erster Gehäusetopf
- 02: zweiter Gehäusetopf
- 03: Erweiterung des zweiten Gehäusetopfs
- 04: O-Ring
- 05: Halterung
- 06: Stecker
- 07: Spindelwelle
- 08: Wellendichtung
- 09: Spindelmutter
- 10: Rotor
- 11: -
- 12: Statorkern
- 13: Statorspulen
- 14: Luftspalt
- 15: rotierende Lagerbleche
- 16: Wälzlager
- 17: stationäre Lagerbleche
- 18: -
- 19: Statorhülsen
- 20: -
- 21: Steuerelektronik
- 22: Kondensator
- 23: Schaltungsträger
- 24: Wärmeleitfolie
- 25: -
- 26: rotierende Gleitlagerteile
- 27: stationärer Lagerring
- 28: Taumelhülse
- 29: Führungshülse
- 30: -
- 31: Permanentmagnet
- 32: Rotorblechpaket

## Patentansprüche

1. Linearstellantrieb, insbesondere zum Verstellen der Klappen in KfzTurboladern, mit einem von einem Elektromotor linear bewegbaren Stellelement (07), wobei der Elektromotor eine zweiphasige Transversalflussmaschine ist, wobei ein Rotor (10) zwischen zwei einphasigen, einander axial gegenüberliegenden Statoren angeordnet ist, wobei der Rotor (10) drehfest mit einem drehbar gelagerten und linear feststehenden Rotationselement (09, 28) verbunden ist, welches mit dem linear bewegbaren Stellelement (07) in Eingriff steht, um bei Drehung des Rotationselements eine lineare Verschiebung des Stellelements (07) hervorzurufen, wobei ein Magnetfluss im Wesentlichen in radialer Richtung von einem Statorkern (12) zum Rotor (10) und vom Rotor (10) zurück zum Statorkern (12) wechselt, **dadurch gekennzeichnet, dass** eine Steuerelektronik (21) in einem Gehäuse (01, 02) des Elektromotors und ein zylindrischer Kondensator (22) teilweise radial innerhalb eines Statorkerns (12) angeordnet sind.

2. Linearstellantrieb nach Anspruch 1, **dadurch gekennzeichnet, dass** das linear bewegbare Stellelement eine Spindelwelle (07) ist.

3. Linearstellantrieb nach Anspruch. 1 oder 2, **dadurch gekennzeichnet, dass** das mit dem Rotor (10) verbundene Rotationselement eine Spindelmutter(09) oder eine Taumelhülse (28) ist.

4. Linearstellantrieb nach einem der Ansprüche 1 bis 3, **dadurch gekennzeichnet, dass** die Statoren axial zueinander ausgerichtete baugleiche Statorkerne (12) aufweisen.

5. Linearstellantrieb nach einem der Ansprüche 1 bis 4, **dadurch gekennzeichnet, dass** die Statorkerne (12) aus ringförmigen Blechen mit U-förmigen Querschnitt bestehen, wobei die Schenkel des Querschnitts einen radial inneren und einen radial äußeren Kronenkranz mit axial hervorragenden Zähnen aufweisen.

6. Linearstellantrieb nach einem der Ansprüche 1 bis 5, **dadurch gekennzeichnet, dass** die Statoren jeweils eine als Ringspule ausgebildete Statorspule (13) aufweisen.

7. Linearstellantrieb nach Anspruch 6, **dadurch gekennzeichnet, dass** die Statorspulen (13) Aluminiumbandspulen oder Kupferdrahtspulen sind.

8. Linearstellantrieb nach einem der Ansprüche 1 bis 7, **dadurch gekennzeichnet, dass** der Elektromotor eine zweiphasige Transversalfluss-Reluktanzmaschine ist, wobei der Rotor (10) ausgeprägte weichmagenetische Pole aufweist.

9. Linearstellantrieb nach Anspruche 8, **dadurch gekennzeichnet, dass** der Rotor (10) aus doppelt gezahnten Ringblechen besteht.

10. Linearstellantrieb nach einem der Ansprüche 1 bis 7, **dadurch gekennzeichnet, dass** der Elektromotor permanenterregt ist, wobei der Rotor (10) mit Permanentmagneten versehen ist.

11. Linearstellantrieb nach Anspruch 10, **dadurch gekennzeichnet, dass** der Rotor (10) zwei Permanentmagnetringe mit wechselweise radial magnetisierten Sektoren auf axial gegenüberliegenden Seiten des Rotationselements (09, 28) umfasst.

12. Linearstellantrieb nach einem der Ansprüche 1 bis 7, **dadurch gekennzeichnet, dass** eine der ersten Phase der zweiphasigen Transversalflussmaschine zugeordnete Seite des Rotors (10) mit Permanentmagneten ausgeführt ist, und dass eine der zweiten Phase zugeordnete Seite des Rotors (10) mit ausgeprägten weichmagnetischen Polen ausgeführt ist.

13. Linearstellantrieb nach einem der Ansprüche 1 bis 12, **dadurch gekennzeichnet, dass** der Rotor (10) über Lagerbleche (15) mit dem Rotations-element (09, 28) verbunden ist.

14. Linearstellantrieb nach einem der Ansprüche 1 bis 13, **dadurch gekennzeichnet, dass** er zur Lagerung des Rotors (10) ein Lager (16, 26, 27) aufweist.

15. Linearstellantrieb nach Anspruch 14, **dadurch gekennzeichnet, dass** das Lager ein Wälzlager (16) oder ein Gleitlager (26, 27) ist.

16. Linearstellantrieb nach einem der Ansprüche 1 bis 15, **dadurch gekennzeichnet, dass** er Statorhülsen (19) zur axialen Führung der Spindelwelle (07) aufweist.

17. Linearstellantrieb nach einem der Ansprüche 1 bis 16, **dadurch gekennzeichnet, dass** das Rotationselement (09, 28) bezogen auf die Achsrichtung des Rotors (10) symmetrisch zwischen den beiden sich gegenüberliegenden Statoren positioniert ist.

18. Linearstellantrieb nach einem der Ansprüche 1 bis 17, **dadurch gekennzeichnet, dass** der Rotor zumindest teilweise radial innerhalb der Statorkerne angeordnet ist.

## Claims

1. Linear actuating drive, in particular for adjusting the flaps in motor vehicle turbochargers, having an actuating element (07) which can be moved linearly by an electric motor, with the electric motor being a two-phase transverse flux machine, with a rotor (10) being arranged between two single-phase stators situated axially opposite one another, with the rotor (10) being connected to a rotatably mounted and linearly stationary rotary element (09, 28) for conjoint rotation therewith, which rotary element is in engagement with the linearly movable actuating element (07) in order to generate a linear movement of the actuating element (07) when the rotary element rotates, with a magnetic flux alternating substantially in the radial direction from a stator core (12) to the rotor (10) and from the rotor (10) back to the stator core (12), **characterized in that** control electronics (21) are arranged in a housing (01, 02) of the electric motor and a cylindrical capacitor (22) is arranged partially radially within a stator core (12).

2. Linear actuating drive according to Claim 1, **characterized in that** the linearly movable actuating element is a spindle shaft (07).

3. Linear actuating drive according to Claim 1 or 2, **characterized in that** the rotary element connected to the rotor (10) is a spindle nut (09) or a wobble sleeve (28) .

4. Linear actuating drive according to one of Claims 1 to 3, **characterized in that** the stators have structurally identical stator cores (12) aligned axially toward one another.

5. Linear actuating drive according to one of Claims 1 to 4, **characterized in that** the stator cores (12) are composed of annular plates of U-shaped cross section, with the legs of the cross section having a radially inner and a radially outer crown ring with axially projecting teeth.

6. Linear actuating drive according to one of Claims 1 to 5, **characterized in that** the stators have in each case one stator coil (13) designed as an annular coil.

7. Linear actuating drive according to Claim 6, **characterized in that** the stator coils (13) are aluminum strip coils or copper wire coils.

8. Linear actuating drive according to one of Claims 1 to 7, **characterized in that** the electric motor is a two-phase transverse flux reluctance machine, with the rotor (10) having distinct soft-magnetic poles.

9. Linear actuating drive according to Claim 8, **characterized in that** the rotor (10) is composed of doubly toothed annular plates.

10. Linear actuating drive according to one of Claims 1 to 7, **characterized in that** the electric motor is permanently excited, with the rotor (10) being provided with permanent magnets.

11. Linear actuating drive according to Claim 10, **characterized in that** the rotor (10) comprises two permanent magnet rings with alternately radially magnetized sectors on axially opposite sides of the rotary element (09, 28).

12. Linear actuating drive according to one of Claims 1 to 7, **characterized in that** a side, which is assigned to the first phase of the two-phase transverse flux machine, of the rotor (10) is formed with permanent magnets, and **in that** a side, which is assigned to the second phase, of the rotor (10) is formed with distinct soft-magnetic poles.

13. Linear actuating drive according to one of Claims 1 to 12, **characterized in that** the rotor (10) is connected to the rotary element (09, 28) via bearing plates (15).

14. Linear actuating drive according to one of Claims 1 to 13, **characterized in that** it has a bearing (16, 26, 27) for mounting the rotor (10).

15. Linear actuating drive according to Claim 14, **characterized in that** the bearing is a rolling bearing (16) or a plain bearing (26, 27).

16. Linear actuating drive according to one of Claims 1 to 15, **characterized in that** it has stator sleeves (19) for the axial guidance of the spindle shaft (07).

17. Linear actuating drive according to one of Claims 1 to 16, **characterized in that** the rotary element (09, 28) is positioned symmetrically between the two opposite stators with respect to the axial direction of the rotor (10).

18. Linear actuating drive according to one of Claims 1 to 17, **characterized in that** the rotor is arranged at least partially radially within the stator cores.

## Revendications

1. Mécanisme de commande linéaire, en particulier pour le réglage de clapets dans des turbocompresseurs de véhicule automobile, comprenant un élément de réglage (07) pouvant être déplacé linéairement par un moteur électrique, le moteur électrique étant une machine à flux transversal à deux phases, un rotor (10) étant disposé entre deux stators monophasés mutuellement opposés axialement, le rotor (10) étant connecté de manière solidaire en rotation à un élément rotatif (09, 28) supporté à rotation et fixe linéairement qui est en prise avec l'élément de réglage (07) pouvant être déplacé linéairement afin de provoquer, lors de la rotation de l'élément rotatif, un déplacement linéaire de l'élément de réglage (07), un flux magnétique alternant essentiellement dans la direction radiale depuis un noyau de stator (12) jusqu'au rotor (10) et depuis le rotor (10) de retour jusqu'au noyau de stator (12), **caractérisé en ce qu'**une électronique de commande (21) est disposée dans un boîtier (01, 02) du moteur électrique et un condensateur cylindrique (22) est disposé partiellement radialement à l'intérieur d'un noyau de stator (12).

2. Mécanisme de commande linéaire selon la revendication 1, **caractérisé en ce que** l'élément de réglage pouvant être déplacé linéairement est un arbre de broche (07).

3. Mécanisme de commande linéaire selon la revendication 1 ou 2, **caractérisé en ce que** l'élément rotatif connecté au rotor (10) est un écrou de broche (09) ou une douille oscillante (28) .

4. Mécanisme de commande linéaire selon l'une quelconque des revendications 1 à 3, **caractérisé en ce que** les stators présentent des noyaux de stator (12) de même construction orientés axialement les uns par rapport aux autres.

5. Mécanisme de commande linéaire selon l'une quelconque des revendications 1 à 4, **caractérisé en ce que** les noyaux de stator (12) se composent de tôles annulaires de section transversale en forme de U, les branches de la section transversale présentant une couronne radialement interne et une couronne radialement externe avec des dents saillant axialement.

6. Mécanisme de commande linéaire selon l'une quelconque des revendications 1 à 5, **caractérisé en ce que** les stators présentent à chaque fois une bobine de stator (13) réalisée sous forme de bobine annulaire.

7. Mécanisme de commande linéaire selon la revendication 6, **caractérisé en ce que** les bobines de stator (13) sont des bobines de bande d'aluminium ou des bobines de fil de cuivre.

8. Mécanisme de commande linéaire selon l'une quelconque des revendications 1 à 7, **caractérisé en ce que** le moteur électrique est une machine à réluctance à flux transversal à deux phases, le rotor (10) présentant des pôles magnétiques doux formés en relief.

9. Mécanisme de commande linéaire selon la revendication 8, **caractérisé en ce que** le rotor (10) se compose de tôles annulaires à double denture.

10. Mécanisme de commande linéaire selon l'une quelconque des revendications 1 à 7, **caractérisé en ce que** le moteur électrique est excité en permanence, le rotor (10) étant pourvu d'aimants permanents.

11. Mécanisme de commande linéaire selon la revendication 10, **caractérisé en ce que** le rotor (10) comprend deux bagues d'aimants permanents avec des secteurs aimantés radialement en alternance sur des côtés opposés axialement de l'élément rotatif (09, 28).

12. Mécanisme de commande linéaire selon l'une quelconque des revendications 1 à 7, **caractérisé en ce qu'**un côté du rotor (10) associé à la première phase de la machine à flux transversal à deux phases est réalisé avec des aimants permanents et **en ce qu'**un côté du rotor (10) associé à la deuxième phase est réalisé avec des pôles magnétiques doux formés en relief.

13. Mécanisme de commande linéaire selon l'une quelconque des revendications 1 à 12, **caractérisé en ce que** le rotor (10) est connecté à l'élément rotatif (09, 28) par le biais de tôles de palier (15) .

14. Mécanisme de commande linéaire selon l'une quelconque des revendications 1 à 13, **caractérisé en ce qu'**il présente un palier (16, 26, 27) pour le support du rotor (10).

15. Mécanisme de commande linéaire selon la revendication 14, **caractérisé en ce que** le palier est un palier à roulement (16) ou un palier lisse (26, 27).

16. Mécanisme de commande linéaire selon l'une quelconque des revendications 1 à 15, **caractérisé en ce qu'**il présente des douilles de stator (19) pour le guidage axial de l'arbre de broche (07)

17. Mécanisme de commande linéaire selon l'une quelconque des revendications 1 à 16, **caractérisé en ce que** l'élément rotatif (09, 28) est positionné par rapport à la direction axiale du rotor (10) symétriquement entre les deux stators opposés.

18. Mécanisme de commande linéaire selon l'une quelconque des revendications 1 à 17, **caractérisé en ce que** le rotor est disposé au moins en partie radialement à l'intérieur des noyaux de stator.
